# EUROPÄISCHE PATENTSCHRIFT

(11) **EP 4 337 858 B1**
(45) Veröffentlichungstag und Bekanntmachung des Hinweises auf die Patenterteilung: **26.11.2025**
(21) Anmeldenummer: 22719796.9
(22) Anmeldetag: 14.04.2022
(51) Int. Cl.: F03D 80/00

(54) **ANTRIEBSRIEMEN**
DRIVING BELT
COURROIE DE TRANSMISSION

(30) Priorität: 12.05.2021 DE 102021204863
(43) Veröffentlichungstag der Anmeldung: 20.03.2024
(73) Patentinhaber: ContiTech Deutschland GmbH, 30175 Hannover (DE)
(72) Erfinder: FISS, Tim, 30165 Hannover (DE); SATTLER, Heiko, 30165 Hannover (DE)
(74) Vertreter: Preusser, Andrea
(86) Internationale Anmeldenummer: PCT/DE2022/200072
(87) Internationale Veröffentlichungsnummer: WO 2022/237939

(56) Entgegenhaltungen:
- EP-A2- 2 101 079
- JP-A- 2002 195 352
- US-A1- 2015 174 960
- US-A1- 2020 116 124
- US-A1- 2020 378 470

## Beschreibung

Die Erfindung betrifft einen Antriebsriemen zur Verwendung in einer Vorrichtung zur Rotorblattverstellung an einer Windkraftanlage gemäß dem Oberbegriff des Anspruchs 1. Weiterhin betrifft die Erfindung eine Vorrichtung zur Rotorblattverstellung mit einem derartigen Antriebsriemen gemäß Anspruch 13, sowie eine Windkraftanlage mit einer derartigen Rotorblattverstellung gemäß Anspruch 14.

### Stand der Technik

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden (Fahnenstellung) und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Stirnradgetrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zugmittelantrieb.

Abhängig von den einzelnen Systemen ist eine Blattverstellung um bis zu 180 Grad um die senkrecht zur Rotordrehachse orientierte Blattdrehachse möglich, wodurch die Rotorblätter in einem Bereich verschwenkt werden können, der von ihrer Maximalleistung bis zur "Fahnenstellung" oder Bremsung reicht.

Die heute zur Verstellung noch dominierenden Stirnradlösungen erfordern einen relativ hohen Wartungsaufwand, da u.a. der Schmierfilm im Zahneingriff erhalten werden muss, d.h. dass in regelmäßigen Abständen nachgefettet werden muss.

Diesen Nachteil vermeidet eine Verstelleinrichtung der Rotorblätter über einen als Zahnriementrieb ausgebildeten Zugmittelantrieb. Bei einer solchen Verstelleinrichtung läuft ein Zahnriemen kämmend über eine mit einem Antriebsmotor verbundene Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden.

So offenbart die US 2020116124 A1 einen Antriebsriemen in einer Vorrichtung zur Rotorblattverstellung an einer Windkraftanlage. Besonders belastbare Antriebsriemen mit einem Festigkeitsträger aus metallischem Werkstoff und einem Basiskörper aus polymerem Werkstoff sind in der JP 2002195352 A, US 2020378470 A1 und der EP 2101079 A2 offenbart.

Die US 20150174960 A1 betrifft einen Luftreifen mit einem Reifengürtel, dessen Stahlcorde für eine verbesserte Haftung mit dem Elastomer mit Messing ummantelt sind.

Beim Einsatz der Windkraftanlagen auf See, auch Offshore genannt, ist der Antriebsriemen hoher Luftfeuchtigkeit mit hohem Salzgehalt ausgesetzt. Dieses Elektrolyt kann das zahnseitige Gewebe des Riemens durchdringen und in Kontakt mit dem Zugstrang des Zahnriemens treten, der in dieser Anwendung üblicherweise aus Stahlcord besteht. In der Folge kann der Stahlcord korrodieren, was einen Festigkeitsabbau und ein frühzeitiges Versagen des Riemens nach sich ziehen kann.

Bekannte Maßnahmen zur Vermeidung der Korrosion des Stahlcords sind dessen vollständige Ummantelung mit einem elastomeren Material zur Kontaktvermeidung mit dem Elektrolyt oder der Ersatz des Stahlcordes durch ein anderes nichtmetallisches Material. Beide Lösungen sind mit erheblichen Steigerungen der Produktionskosten, erhöhter Reibung im Zahneingriffsbereich und bzw. oder schlechteren Festigkeitseigenschaften verbunden.

Aus vollkommen anderen technischen Einsatzgebieten wie zum Beispiel bei Pipelines und anderen stationären Bauwerken ist der kathodische Korrosionsschutz für Stahlbauteile durch Einsatz einer hiermit leitend verbundenen Opferanode im gemeinsamen Kontakt mit einem Elektrolyt bekannt. Die Opferanode besteht aus einem unedleren Metall als das Metall des vor Korrosion zu schützenden Bauteils. Mit anderen Worten gesagt ist das Material des vor Korrosion zu schützenden Bauteils in der elektrochemischen Spannungsreihe positiver als das der Opferanode eingeordnet. Dieses edlere Metall bildet die Kathode und ist solange vor Korrosion geschützt, bis die Opferanode wegkorrodiert ist.

Der kathodische Korrosionsschutz kann mit oder ohne Fremdstrom erfolgen. Bei einem kathodischen Korrosionsschutz mit Fremdstrom wird eine Spannung an eine Fremdstrom-Anode angelegt. Ein kathodischer Korrosionsschutz ohne Fremdstrom findet vorzugsweise bei Kontakt von Metallen mit Wasser als Elektrolyt seine Anwendung. Die Kathode und die Anode sind über das elektrisch leitfähige Elektrolyt in einem geschlossenen Stromkreis miteinander verbunden, sodass ein Strom, gespeist aus einer Redoxreaktion der Oxidation der Opferanode, fließen kann.

In diesem Zusammenhang sei beispielsweise die EP 2 014 725 A1 erwähnt, die einen kathodischen Korrosionsschutz für Bewehrungen von Stahlbetonwerken offenbart. Der kathodische Korrosionsschutz wird in diesem Fall über eine Epoxidharzzusammensetzung mit einem hohen Anteil an Zinkpartikeln als Füllstoff realisiert. Die Epoxidharzzusammensetzung wird hierbei direkt auf den Bewehrungsstahl aufgetragen.

Technische Lösungen für die Verwendung eines kathodischen Korrosionsschutzes an Antriebsriemen, sind aus dem Stand der Technik nicht bekannt.

### Aufgabe

Der Erfindung liegt die Aufgabe zugrunde, einen Antriebsriemen bereitzustellen, bei dem eine Korrosion des Stahlcordes möglichst verhindert werden kann. Durch Verhinderung einer Korrosion sollen die Festigkeitseigenschaften des Stahlcordes möglichst über die gesamte Lebensdauer des Antriebsriemens unverändert aufrechterhalten werden können. Insbesondere besteht die Aufgabe darin, eine Lösung zum Korrosionsschutz des Stahlcords bereit zu stellen, die mit üblichen Herstellungsverfahren des Antriebsriemens kompatibel ist, ohne das Herstellungsverfahren wesentlich zu verändern. Insbesondere sollen die vorhandenen Eigenschaften des Reibbeiwertes sowie der Verschleißbeständigkeit der Oberfläche des Antriebsriemens nicht negativ beeinflusst werden.

### Lösung der Aufgabe

Die Lösung dieser Aufgabe ergibt sich durch einen Antriebsriemen mit den Merkmalen des Hauptanspruchs, wobei der Antriebsriemen eine Opferanode aus einem metallischen Werkstoff, der unedler als der metallische Werkstoff des Festigkeitsträgers ist, aufweist.

Weitere vorteilhafte Ausbildungen sind in den abhängigen Ansprüchen offenbart. Anspruch 13 offenbart eine Vorrichtung zur Rotorblattverstellung mit einem erfindungsgemäßen Antriebsriemen.

Anspruch 14 offenbart eine Windkraftanlage mit wenigstens einer erfindungsgemäßen Vorrichtung zur Rotorblattverstellung.

### Vorteile der Erfindung

Anspruch 1 offenbart einen Antriebsriemen zur Verwendung in einer Vorrichtung zur Rotorblattverstellung an einer Windkraftanlage, umfassend einen Basiskörper aus polymerem Werkstoff und wenigstens einen darin eingebetteten, in Längsrichtung, Umfangsrichtung oder Laufrichtung des Antriebsriemens verlaufenden Festigkeitsträger aus metallischem Werkstoff, vorzugsweise aus Stahl, umfassend eine erste Oberfläche und eine der ersten Oberfläche gegenüberliegende zweite Oberfläche, wobei mindestens die erste Oberfläche ein Armierungsgewebe aufweist. Erfindungsgemäß ist der Antriebsriemen durch wenigstens eine Opferanode aus einem metallischen Werkstoff gekennzeichnet, wobei der metallische Werkstoff unedler als der metallische Werkstoff des Festigkeitsträgers ist. Das Armierungsgewebe kann beispielsweise aus Polyamid ausgebildet sein.

Ein Antriebsriemen umfasst hierbei sämtliche Ausführungsformen von Zahnriemen, Flachriemen, Keilriemen und Keilrippenriemen. Diese Antriebsriemen können von bestimmter Länge ausgebildet sowohl endlos geschlossen als auch Längenabschnitte mit zwei Enden sein. Derartige Antriebsriemen können im Automobil, im Anlagen- und Maschinenbau oder sonstigen industriellen Anwendungen zum Einsatz kommen. Für den Gegenstand der vorliegenden Erfindung sind insbesondere Riementriebsysteme mit Stahlkorden unter Einfluss von Feuchtigkeit von Relevanz.

Die Opferanode ist aus einem metallischen Werkstoff ausgebildet, welcher unedler als der metallische Werkstoff des Festigkeitsträgers ist. Mit anderen Worten gesagt ist der metallische Werkstoff der Opferanode im Vergleich zu dem Werkstoff des Festigkeitsträgers in der elektrochemischen Spannungsreihe negativer eingeordnet. Der in der elektrochemischen Spannungsreihe negativer eingeordnete Werkstoff kann in einem galvanischen Element eine Anode darstellen, während der edlere Werkstoff, welcher in der elektrochemischen Spannungsreihe positiver eingeordnet ist, die Kathode repräsentieren kann.

**In** Kontakt mit einem Elektrolyt, das beispielsweise durch salzhaltiges Wasser beim Offshore-Einsatz einer mit dem erfindungsgemäßen Antriebsriemen ausgebildeten Windkraftanlage gebildet sein kann, kann ein Stromkreis zwischen Kathode und Anode geschlossen werden. Hierbei kann der Werkstoff der Anode unter Abgabe von Elektronen oxidiert werden, während der Werkstoff der Kathode unter Aufnahme von Elektronen reduziert wird, wobei unter Bildung von Wasserstoff an der Anode der Werkstoff der Kathode vor Korrosion geschützt werden kann.

Einen besonders vorteilhaften Werkstoff der Opferanode bei der Verwendung in einem Antriebsriemen mit Stahlcord als Kathode bildet Grafit. Grafit kann auf besonders vorteilhafte Weise in verschiedensten Ausführungsformen und Partikelgrößen in einen Antriebsriemen integriert werden.

Die Integration einer Opferanode in einen Antriebsriemen mit Stahlcord kann auf besonders vorteilhafte Weise eine frühzeitige Korrosion des Stahlcordes verhindern. Somit können die Festigkeitseigenschaften des Stahlcordes unverändert aufrechterhalten werden, was das Wechselintervall bzw. die Lebensdauer des Antriebsriemens verlängern kann.

Insbesondere bei Verwendung des erfindungsgemäßen Antriebsriemens in einer Vorrichtung zur Rotorblattverstellung an einer Windkraftanlage, insbesondere bei Offshore-Anwendungen, können sich für Betreiber wirtschaftliche Vorteile ergeben, da die Betriebssicherheit der Windkraftanlage erhöht werden kann. Hierdurch können ungeplante und aufgrund des hohen logistischen Aufwands sehr teure Wartungsmaßnahmen reduziert werden.

Gemäß einem weiteren Aspekt weist der Antriebsriemen eine Mehrzahl von Festigkeitsträgern auf, wobei die Festigkeitsträger zueinander beabstandet sind und zwischeneinander wenigstens eine angeordnete Spullücke bilden. Hierbei verläuft die Opferanode in den Spullücken seilförmig, parallel zu dem Festigkeitsträger. Hierdurch ergibt sich auf besonders vorteilhafte Weise, dass die Opferanode während des Spulvorgangs des Stahlcordes mit derselben Vorrichtung verlegt werden kann. Eine seilförmig ausgebildete Opferanode kann zudem ergänzend als Festigkeitsträger dienen und die Belastungsfähigkeit des Antriebsriemens steigern.

Eine weitere vorteilhafte Ausbildung besteht darin, dass die Opferanode als Flächengebilde ausgebildet und zwischen dem Armierungsgewebe und dem Basiskörper aus polymerem Werkstoff angeordnet ist. Hierdurch kann der Riemenaufbau wie bekannt beibehalten werden, wodurch keinerlei Anpassungen des Fertigungsprozesses erforderlich sind. Die als Flächengebilde ausgebildete Opferanode kann mit den vorhandenen Vorrichtungen der Fertigungsanlage, die auch das Armierungsgewebe auf den Basiskörper des Antriebsriemens applizieren, verbaut werden. Durch die Anordnung der Opferanode zwischen dem Armierungsgewebe und dem Basiskörper des Antriebsriemens können die Reibeigenschaften der Riemenoberfläche beibehalten werden.

Gemäß einem weiteren Aspekt der vorliegenden Erfindung weist die Opferanode eine Perforation auf, wobei die Perforation zumindest teilweise von dem polymeren Material gefüllt ist. Als Perforation sind Durchgangsöffnungen in der Opferanode zu verstehen, durch welche das polymere Material während des Herstellungsprozesses hindurchtreten kann. So kann eine hinreichende Anbindung zwischen dem polymeren Material des Riemenkörpers und der Opferanode sichergestellt werden. Insbesondere bei der Herstellung von Zahnriemen im Gießverfahren kann sich diese Ausführungsform der Opferanode als besonders vorteilhaft erweisen, da das polymere Material die einzelnen Komponenten bzw. die sich dazwischen oder darin befindlichen Lücken, Poren oder Öffnungen bis in den Zahnbereich durchdringen kann.

Gemäß einem weiteren Aspekt ist die Opferanode als Mischungszusatz in dem polymeren Werkstoff ausgebildet. Hierdurch kann der Fertigungsprozess des erfindungsgemäßen Antriebsriemens derart optimiert werden, dass sämtliches Materialhandling der zusätzlichen Werkstoffkomponente für die Opferanode im Konfektionsprozess entfällt. Üblicher Weise erfolgt die Mischungsherstellung örtlich und räumlich von dem Herstellungsprozess des Riemenkörpers und der einzelnen Gewebe- und Festigkeitsträgerlagen getrennt. Mit anderen Worten gesagt kann der herkömmliche Konfektionsprozess eines Antriebsriemens unverändert für die Herstellung eines Antriebsriemens mit Opferanode angewendet werden. Hierdurch können Mehrkosten für die Industrialisierung des erfindungsgemäßen Antriebsriemens reduziert werden.

Gemäß einem weiteren Aspekt ist die Opferanode als Beschichtung des Armierungsgewebes ausgebildet. Auch hierdurch können sich die zuvor erläuterten Vorteile einer Auslagerung der prozessspezifischen Anpassungen von dem Konfektionsprozess hin zur davon räumlich und zeitlich getrennten Materialvorbereitung ergeben.

Eine weitere vorteilhafte Ausbildung besteht darin, dass die Opferanode Kohlenstoff, vorzugsweise Grafit oder Ruß, aufweist oder vorzugsweise hieraus ausgebildet ist. Da Kohlenstoff, Grafit oder Ruß als Bestandteil von Antriebsriemen bekannt und erprobt ist, können durch deren Verwendung, als zusätzliche Funktion einer Opferanode, die mechanischen Eigenschaften des Antriebsriemens beibehalten werden. Mit anderen Worten gesagt verändert die Opferanode die mechanischen Eigenschaften des Antriebsriemens nicht, wenn diese vorteilhafter Weise aus Kohlenstoff, Grafit oder Ruß ausgebildet ist.

Gemäß einem weiteren Aspekt ist der Antriebsriemen offen ausgebildet ist, das heißt, dass der Antriebsriemen einen Längenabschnitt bildet, der ein erstes und ein zweites Ende aufweist. An den beiden Enden sind der Festigkeitsträger und die Opferanode jeweils getrennt voneinander kontaktierbar. So können die beschriebenen Vorteile eines kathodischen Korrosionsschutzes auf Antriebsriemen mit offenen Enden übertragen werden.

Es ergibt sich auf vorteilhafte Weise, dass gemäß einem weiteren Aspekt durch die Möglichkeit der Kontaktierung eine externe Fremdspannung zur Realisierung eines aktiven kathodischen Korrosionsschutzes mit Fremdstrom anlegbar ist. Durch die externe Fremdspannung kann die Wirksamkeit des Korrosionsschutzes für den Stahlcord des Antriebsriemens erhöht werden.

Gemäß einem weiteren Aspekt ist der Antriebsriemen endlos geschlossen ausgebildet. So können die beschriebenen Vorteile eines kathodischen Korrosionsschutzes auf endlos geschlossene Antriebsriemen übertragen werden.

Gemäß einem weiteren Aspekt ist der Antriebsriemen als Zahnriemen ausgebildet. So können die beschriebenen Vorteile eines kathodischen Korrosionsschutzes auf Zahnriemen übertragen werden.

Gemäß einem weiteren Aspekt ist der polymere Werkstoff aus Polyurethan ausgebildet. Es ergibt sich auf vorteilhafte Weise, dass die beschriebenen Vorteile eines kathodischen Korrosionsschutzes auf Antriebsriemen aus Polyurethan übertragen werden können.

Eine weitere vorteilhafte Ausbildung sieht eine Vorrichtung zur Rotorblattverstellung einer Windkraftanlage mit wenigstens einem erfindungsgemäßen Antriebsriemen vor. Insbesondere bei Vorrichtungen zur Rotorblattverstellung an Windkraftanlagen auf See, auch Offshore genannt, kann salzhaltiges Seewasser eine Korrosion der Stahlcorde des Antriebsriemens verursachen. Hier ist die Anwendung der erfindungsgemäßen Lösung zum Korrosionsschutz der Stahlcorde besonders vorteilhaft, da außerplanmäßigen Wartungs- und Instandhaltungsarbeiten durch eine hohe Ausfallsicherheit des Antriebsriemens vorgebeugt werden kann.

Gemäß einem weiteren Aspekt ist eine Windkraftanlage mit wenigstens einer erfindungsgemäßen Vorrichtung zur Rotorblattverstellung vorgesehen. Die zuvor genannten Vorteile können so auf eine Windkraftanlage übertragen werden. Für den Betreiber der Windkraftanlage können sich durch Verwendung der erfindungsgemäßen Vorrichtung wirtschaftliche Vorteile ergeben, da die Betriebssicherheit erhöht werden kann und außerplanmäßigen Wartungs- und Instandhaltungsarbeiten durch eine hohe Ausfallsicherheit des Antriebsriemens vorgebeugt werden können.

### Erläuterung Figuren

Anhand von Figuren werden im Folgenden verschiedene Ausführungsbeispiele der Erfindung näher erläutert.
Fig. 1 zeigt die Anordnung der einzelnen Komponenten eines erfindungsgemäßen Zahnriemens in einer Schnittdarstellung.
Fig. 2 zeigt die schematische Darstellung eines Antriebsriemens mit einer passiven Opferanode.
Fig. 3 zeigt die schematische Darstellung eines Antriebsriemens mit einer aktiven Opferanode.

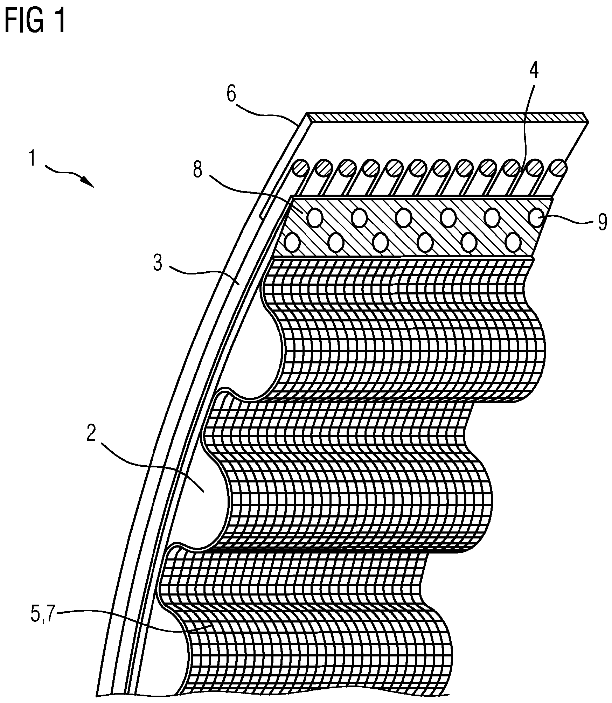

In Figur 1 ist ein erfindungsgemäßer Zahnriemen 1 dargestellt. Der Zahnriemen 1 weist, von der ersten Oberfläche 5 aus betrachtet, einen schichtweisen Aufbau aus einem Armierungsgewebe 7 aus Polyamid, einem Basiskörper 2 aus Polyurethan, einer Opferanode 8 und einem in Umfangsrichtung des Antriebsriemens 1 orientierten und in Querrichtung des Antriebsriemens 1 parallel verlaufenden Festigkeitsträger 3 in Form von seilförmigen Zugsträngen aus Stahl auf, die in Querrichtung untereinander Spullücken 4 bilden. Die zweite Oberfläche 6, die in diesem Falle den Riemenrücken bildet, ist zum Schutz des Basiskörpers 2 mit einem Gewebe belegt. Die Opferanode 8 ist in dem dargestellten Ausführungsbeispiel als ein Flächengebilde ausgeführt, das eine Perforation 9 in Form von kreisförmigen Durchgangsbohrungen aufweist. Die Perforation 9 dient dazu, dass das Polyurethan des Basiskörpers 2 bei der Herstellung des Antriebsriemens 1 diese durchdringt und die Opferanode 8 dadurch in den Basiskörper 2 einbettet, sodass eine hoch belastbare stoffschlüssige Anbindung zwischen dem Polyurethan des Basiskörpers 2 und der Opferanode 8 erzielt wird.

Das Material der Opferanode 8 besteht aus Grafit, das in der elektrochemischen Spannungsreihe negativer als der Stahlwerkstoff des Festigkeitsträgers 3 eingeordnet ist. Der Stahlwerkstoff des Festigkeitsträgers 3 repräsentiert den edleren Werkstoff, welcher in der elektrochemischen Spannungsreihe positiver eingeordnet ist und in einem galvanischen Element die Kathode repräsentiert.

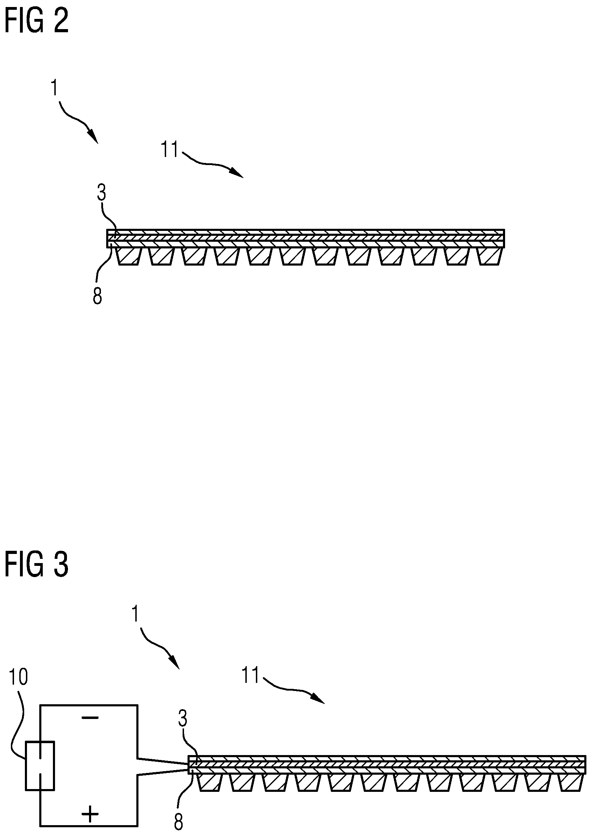

Figur 2 zeigt die schematische Darstellung des zuvor beschriebenen Antriebsriemens mit einer passiven Opferanode 8. Als passiver Opferanode 8 ist zu verstehen, dass der Stromkreis mit keiner externen Spannung 10, vgl. Figur 3, versorgt wird. Der Antriebsriemen 1 ist in einer feuchten Umgebung 11 dargestellt. Die feuchte Umgebung 11 ist als eine Umgebung mit hoher salzhaltiger Luftfeuchtigkeit zu verstehen, was bei der Verwendung eines Antriebsriemens 1 an Windkraftanlagen auf See eine übliche Bedingung ist. So ist die Luftfeuchtigkeit durch das umgebende salzhaltige Meerwasser ohnehin sehr hoch und wird durch den unmittelbaren Kontakt des Antriebsriemens 1 mit Gischt und Spritzwasser noch verstärkt. Das salzhaltige Meerwasser ist elektrisch leitfähig und schließt den Stromkreis zwischen der Kathode bzw. dem Festigkeitsträger 3 und der Opferanode 8. Hierbei wird das Grafit der Opferanode 8 unter Abgabe von Elektronen oxidiert, während das Stahl des Festigkeitsträgers 3 unter Aufnahme von Elektronen reduziert wird, wobei unter Bildung von Wasserstoff an der Opferanode 8 der Festigkeitsträger 3 vor Korrosion geschützt wird.

Figur 3 zeigt die schematische Darstellung des eingangs beschriebenen Antriebsriemens 1 mit einer aktiven Opferanode 8. Aktiv bedeutet in diesem Zusammenhang, dass der Stromkreis zwischen Festigkeitsträger 3 und der Opferanode 8 über das Elektrolyt zusätzlich mit einer externen Spannungsversorgung 10 geschlossen wird. Der Vorgang einer Oxidation der Opferanode 8 und der Reduktion des Festigkeitsträgers 3 verläuft wie in der Beschreibung von Figur 2 erläutert. Durch die zusätzliche Spannungsversorgung 10 wird die Wirksamkeit des Korrosionsschutzes nochmals verstärkt. Zur Anwendung geeignet ist der aktive kathodische Korrosionsschutz bei Antriebsriemen 1, die als Meterware, also als Riemenabschnitt mit vorbestimmter Länge, zum Einsatz kommen. Derartige Antriebsriemen 1 weisen beidseitig einen offenliegenden Querschnitt auf, an dem sowohl der Festigkeitsträger 3 als auch die Opferanode 8 kontaktiert werden kann, was das Anlegen einer externen Fremdspannung 10 ermöglicht.

### Bezugszeichenliste (Teil der Beschreibung)

- 1: Antriebsriemen
- 2: Basiskörper
- 3: Festigkeitsträger
- 4: Spullücke
- 5: Erste Oberfläche
- 6: Zweite Oberfläche
- 7: Armierungsgewebe
- 8: Opferanode
- 9: Perforation
- 10: Externe Spannungsversorgung
- 11: Feuchte Umgebungsluft

## Patentansprüche

1. Antriebsriemen (1) zur Verwendung in einer Vorrichtung zur Rotorblattverstellung an einer Windkraftanlage,
umfassend einen Basiskörper (2) aus polymerem Werkstoff und wenigstens einen darin eingebetteten, in Längsrichtung des Antriebsriemens verlaufenden Festigkeitsträger (3) aus metallischem Werkstoff,
umfassend eine erste Oberfläche (5) und eine der ersten Oberfläche gegenüberliegende zweite Oberfläche (6),
wobei mindestens die erste Oberfläche (5) ein Armierungsgewebe (7) aufweist,
**gekennzeichnet durch**
eine Opferanode (8) aus einem metallischen Werkstoff, wobei der metallische Werkstoff unedler als der metallische Werkstoff des Festigkeitsträgers (3) ist.

2. Antriebsriemen (1) nach Anspruch 1,
**dadurch gekennzeichnet, dass**
der Antriebsriemen eine Mehrzahl von Festigkeitsträgern aufweist, wobei die Festigkeitsträger (3) zueinander beabstandet sind und zwischeneinander wenigstens eine angeordnete Spullücke (4) bilden, wobei die Opferanode (8) in der Spullücke (4) seilförmig, parallel zu den Festigkeitsträgern (3) verläuft.

3. Antriebsriemen (1) nach Anspruch 1,
**dadurch gekennzeichnet, dass**
die Opferanode (8) als Flächengebilde ausgebildet und zwischen dem Armierungsgewebe (7) und dem Basiskörper (2) aus polymerem Werkstoff angeordnet ist.

4. Antriebsriemen (1) nach Anspruch 3,
**dadurch gekennzeichnet, dass**
die Opferanode (8) eine Perforation (9) aufweist, wobei die Perforation (9) zumindest teilweise von dem polymeren Werkstoff gefüllt ist.

5. Antriebsriemen (1) nach Anspruch 1,
**dadurch gekennzeichnet, dass**
die Opferanode (8) als Mischungszusatz in dem polymeren Werkstoff ausgebildet ist.

6. Antriebsriemen (1) nach Anspruch 1,
**dadurch gekennzeichnet, dass**
die Opferanode (8) als Beschichtung des Armierungsgewebes (7) ausgebildet ist.

7. Antriebsriemen (1) nach einem der vorhergehenden Ansprüche,
**dadurch gekennzeichnet, dass**
die Opferanode (8) Kohlenstoff, vorzugsweise Grafit oder Ruß, aufweist, vorzugsweise hieraus ausgebildet ist.

8. Antriebsriemen (1) nach einem der vorhergehenden Ansprüche,
**dadurch gekennzeichnet, dass**
der Antriebsriemen (1) offen ausgebildet ist, wobei der Festigkeitsträger (3) und die Opferanode (8) an den Enden jeweils getrennt voneinander kontaktierbar sind.

9. Antriebsriemen (1) nach Anspruch 8,
**dadurch gekennzeichnet, dass**
an die kontaktierte Opferanode (8) und den Festigkeitsträger (3) eine externe Fremdspannung (10) anlegbar ist.

10. Antriebsriemen (1) nach einem der Ansprüche 1 bis 7,
**dadurch gekennzeichnet, dass**
der Antriebsriemen (1) endlos geschlossen ausgebildet ist.

11. Antriebsriemen (1) nach einem der vorhergehenden Ansprüche,
**dadurch gekennzeichnet, dass**
der Antriebsriemen (1) als ZahnAntriebsriemen ausgebildet ist.

12. Antriebsriemen (1) nach einem der vorhergehenden Ansprüche,
**dadurch gekennzeichnet, dass**
der polymere Werkstoff aus Polyurethan ausgebildet ist.

13. Vorrichtung zur Rotorblattverstellung einer Windkraftanlage mit wenigstens einem Antriebsriemen (1) nach einem der Ansprüche 1 bis 12.

14. Windkraftanlage mit wenigstens einer Vorrichtung zur Rotorblattverstellung nach Anspruch 13.

## Claims

1. Drive belts (1) for use in a device for rotor blade adjustment on a wind turbine, comprising a base body (2) made of polymer material and at least one reinforcement member (3) of metallic material embedded therein running longitudinally in the longitudinal direction of the drive belt,
comprising a first surface (5) and a second surface (6) opposite the first surface, wherein at least the first surface (5) has a reinforcing fabric (7),
**characterized by** the fact that
a sacrificial anode (8) made of a metallic material, wherein the metallic material is less noble than the metallic material of the strength member (3).

2. Drive belt (1) according to claim 1,
**characterized by** the fact that
the drive belt has a plurality of strength members, wherein the strength members (3) are spaced from each other and form at least one arranged coil gap (4) between each other, wherein the sacrificial anode (8) runs rope-like in the coil gap (4), parallel to the strength members (3).

3. Drive belts (1) according to claim 1,
**characterized by** the fact that
the sacrificial anode (8) is formed as a surface structure and is arranged between the reinforcing fabric (7) and the base body (2) made of polymer material.

4. Drive belt (1) according to claim 3,
**characterized by** the fact that
the sacrificial anode (8) has a perforation (9), wherein the perforation (9) is at least partially filled by the polymer material.

5. Drive belt (1) according to claim 1,
**characterized by** the fact that
the sacrificial anode (8) is formed as a mixture additive in the polymer material.

6. Drive belt (1) according to claim 1,
**characterized by** the fact that
the sacrificial anode (8) is designed as a coating of the reinforcing fabric (7).

7. Drive belt (1) according to any of the preceding claims,
**characterized by** the fact that
the sacrificial anode (8) has carbon, preferably graphite or carbon black, preferably formed from it.

8. Drive belt (1) according to any of the preceding claims,
**characterized by** the fact that
the drive belt (1) is open, wherein the strength member (3) and the sacrificial anode (8) can each be contacted separately at the ends.

9. Drive belt (1) according to claim 8,
**characterized by** the fact that
an external external voltage (10) can be applied to the contacted sacrificial anode (8) and the strength member (3).

10. Drive belt (1) according to any one of claims 1 to 7,
**characterized by** the fact that
the drive belt (1) is designed to be endlessly closed.

11. Drive belts (1) according to any of the preceding claims,
**characterized by** the fact that
the drive belt (1) is designed as a toothed drive belt.

12. drive belts (1) according to any of the preceding claims,
**characterized by** the fact that
the polymer material is made of polyurethane.

13. Apparatus for rotor blade adjustment of a wind turbine having at least one drive belt (1) according to any one of claims 1 to 12.

14. Wind turbine having at least one device for rotor blade adjustment according to claim 13.

## Revendications

1. Courroies d'entraînement (1) destinées à être utilisées dans un dispositif de réglage des pales de rotor d'une éolienne,
comprenant un corps de base (2) en matériau polymère et au moins un élément de renfort (3) en matériau métallique qui y est intégré, se déplaçant longitudinalement dans le sens longitudinal de la courroie d'entraînement,
comprenant une première surface (5) et une seconde surface (6) opposée à la première surface,
dans lequel au moins la première surface (5) présente un tissu de renfort (7), **caractérisée par le fait que**
Anode sacrificielle (8) faite d'un matériau métallique, dans laquelle le matériau métallique est moins noble que le matériau métallique de l'élément de résistance (3).

2. Courroie d'entraînement (1) selon la revendication 1,
**caractérisée par le fait que**
La courroie d'entraînement a une pluralité d'éléments de résistance, dans lesquels les éléments de résistance (3) sont espacés les uns des autres et forment au moins un espace de bobine (4) disposé entre eux, dans lequel l'anode sacrificielle (8) passe comme une corde dans l'espace de bobine (4), parallèlement aux éléments de résistance (3).

3. Courroies d'entraînement (1) selon la revendication 1,
**caractérisée par le fait que**
L'anode sacrificielle (8) est formée comme une structure de surface et est disposée entre le tissu de renfort (7) et le corps de base (2) en matériau polymère.

4. Courroie d'entraînement (1) selon la revendication 3,
**caractérisée par le fait que**
L'anode sacrificielle (8) présente une perforation (9), dans laquelle la perforation (9) est au moins partiellement remplie par le matériau polymère.

5. Planche à billets Courroie d'entraînement (1) selon la revendication 1,
**caractérisée par le fait que**
L'anode sacrificielle (8) est formée en tant qu'additif de mélange dans le matériau polymère.

6. Courroie d'entraînement (1) selon la revendication 1,
**caractérisée par le fait que**
L'anode sacrificielle (8) est conçue comme un revêtement du tissu de renforcement (7).

7. Courroie d'entraînement (1) selon l'une quelconque des revendications précédentes,
**caractérisée par le fait que**
L'anode sacrificielle (8) est constituée de carbone, de préférence de graphite ou de noir de carbone, de préférence formé à partir de celui-ci.

8. Courroie d'entraînement (1) selon l'une quelconque des revendications précédentes,
**caractérisée par le fait que**
La courroie d'entraînement (1) est ouverte, dans laquelle l'élément de résistance (3) et l'anode sacrificielle (8) peuvent chacun être contactés séparément aux extrémités.

9. Courroie d'entraînement (1) selon la revendication 8,
**caractérisée par le fait que**
Une tension externe externe (10) peut être appliquée à l'anode sacrificielle (8) en contact et à l'élément de résistance (3).

10. Courroie d'entraînement (1) selon l'une quelconque des revendications 1 à 7, **caractérisée par le fait que**
La courroie d'entraînement (1) est conçue pour être fermée à l'infini.

11. Courroies d'entraînement (1) selon l'une quelconque des revendications précédentes,
**caractérisée par le fait que** s
La courroie d'entraînement (1) est conçue comme une courroie d'entraînement crantée.

12. Épisode 12 courroies d'entraînement (1) selon l'une quelconque des revendications précédentes,
**caractérisée par le fait que**
Le matériau polymère est en polyuréthane.

13. Appareil pour le réglage des pales de rotor d'une éolienne comportant au moins une courroie d'entraînement (1) selon l'une quelconque des revendications 1 à 12.

14. Éolienne comportant au moins un dispositif de réglage des pales de rotor selon la revendication 13.
